# EUROPEAN PATENT SPECIFICATION

(11) **EP 3 575 950 B1**
(45) Date of publication and mention of the grant of the patent: **25.10.2023**
(21) Application number: 19177398.5
(22) Date of filing: 29.05.2019
(51) Int. Cl.: G06F 3/16, G06F 3/0488

(54) **TERMINAL CONTROL METHOD, DEVICE AND COMPUTER READABLE STORAGE MEDIUM**
ENDGERÄTESTEUERUNGSVERFAHREN, VORRICHTUNG UND COMPUTERLESBARES SPEICHERMEDIUM
PROCÉDÉ DE COMMANDE DE TERMINAL, DISPOSITIF ET SUPPORT D'ENREGISTREMENT LISIBLE PAR ORDINATEUR

(30) Priority: 31.05.2018 CN 201810548957
(43) Date of publication of application: 04.12.2019
(73) Proprietor: Beijing Xiaomi Mobile Software Co., Ltd., Beijing 100085 (CN)
(72) Inventor: TANG, Jin, Beijing, 100085 (CN); JIN, Fan, Beijing, 100085 (CN); XU, Tianguo, Beijing, 100085 (CN)
(74) Representative: Hughes, Andrea Michelle

(56) References cited:
- US-A1- 2010 318 366
- US-A1- 2014 168 130
- US-A1- 2015 032 457
- US-A1- 2016 098 157
- US-A1- 2017 336 848
- US-B2- 8 498 670

## Description

### TECHNICAL FIELD

The present disclosure relates to the field of terminal control, and more particularly, to a terminal control method and device, and a computer readable storage medium.

### BACKGROUND

In the related art, many terminal devices such as a smart phone, a tablet computer, etc. are provided with a voice assistant program, and the activating mode for the voice assistant program in these terminals usually includes voice activating, software button activating, physical button activating, gesture interaction or the like. Among these activating modes for these related voice assistants, the voice activating mode has higher requirements on the hardware of the terminal, since the voice activating mode requires that the terminal be supported by low-power consumption activating chip. Based on cost consideration, not all terminals can support low-power consumption activating chip. Therefore, this kind of voice activating method cannot be widely used in most terminals; while the other three activating modes do not have certain hardware requirements on the terminal, they are complicated, requiring fixed actions from the user. For example, before activating the voice assistant, it is required to double-click the home button, unlock the terminal and click a fixed entrance, etc. As such, in a case where it is inappropriate for the user to be distracted, for example, during driving, activating the voice assistant would be very disadvantageous to the user. If the user in this situation activates the voice assistant through the existing method, the user is easily distracted and an accident would be caused. Voice assistants that can be activated by a touch applied anywhere in the entire area of the screen are known from US 8,498,670 B2, US 2015/032457 A1 and US 2010/318366 A1.

### SUMMARY

In order to overcome the problem existing in the related art, the present disclosure provides a terminal control method and device, and a computer readable storage medium.

According to a first aspect of the embodiments of the present invention, there is provided a terminal control method as defined in claim 1.

The method further includes optional features as described by dependent claims 2-5.

According to another aspect of the embodiments of the present invention, there is provided a terminal control device as defined in claim.

The device further includes optional features as described by dependent claims 7-10.

Also disclosed is a terminal control device. The device includes:
a processor; and
a memory for storing instructions executable by the processor,
wherein the processor is configured to:
   receive a first touch instruction applied to a first preset area of a display screen of the terminal; and
   when an operation mode of the terminal is a preset mode and the preset mode is a display state, activate a voice assistant of the terminal in response to reception of the first touch instruction.

According to another aspect of the embodiments of the present invention, there is provided a computer readable storage medium as defined in claim 11 having stored thereon a computer program instruction that, when being executed by a processor, executes the steps of the terminal control method provided by the first aspect of the present disclosure.

The technical solution according to the embodiments of the present disclosure may have the following beneficial effects: when the terminal is in a preset mode and the preset mode is a display state, for activating the voice assistant in the terminal, the user only has to apply a first touch instruction to a first preset area of a display screen of the terminal. No additional complicated operations are required, and the operation of activating the voice assistant is greatly simplified for the user so that the user can activate the voice assistant quickly and conveniently when it is inconvenient for the user to operate the terminal while he/she has to use the voice assistant, thus preventing occurrence of accidents caused by distract of the user when controlling activation of the voice assistant in the terminal. Moreover, there are no very high requirements on the hardware of the terminal, and the present disclosure is applicable for most terminals.

It should be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flowchart illustrating a terminal control method according to an exemplary embodiment.
Fig. 2 is a flowchart illustrating a terminal control method according to another exemplary embodiment.
Fig. 3 is a flowchart illustrating a terminal control method according to further another exemplary embodiment.
Figs. 4A and 4B are schematic diagrams illustrating a display screen of a terminal according to an exemplary embodiment.
Fig. 5 is a schematic block diagram illustrating a terminal control device according to an exemplary embodiment.
Fig. 6 is a schematic block diagram illustrating a terminal control device according to another exemplary embodiment.
Fig. 7 is a schematic block diagram illustrating a terminal control device according to further another exemplary embodiment.
Fig. 8 is a block diagram illustrating a terminal control device.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

In the present application, "display state" and "enabled state" are used interchangeably, and "hidden state" and "disabled state" are used interchangeably.

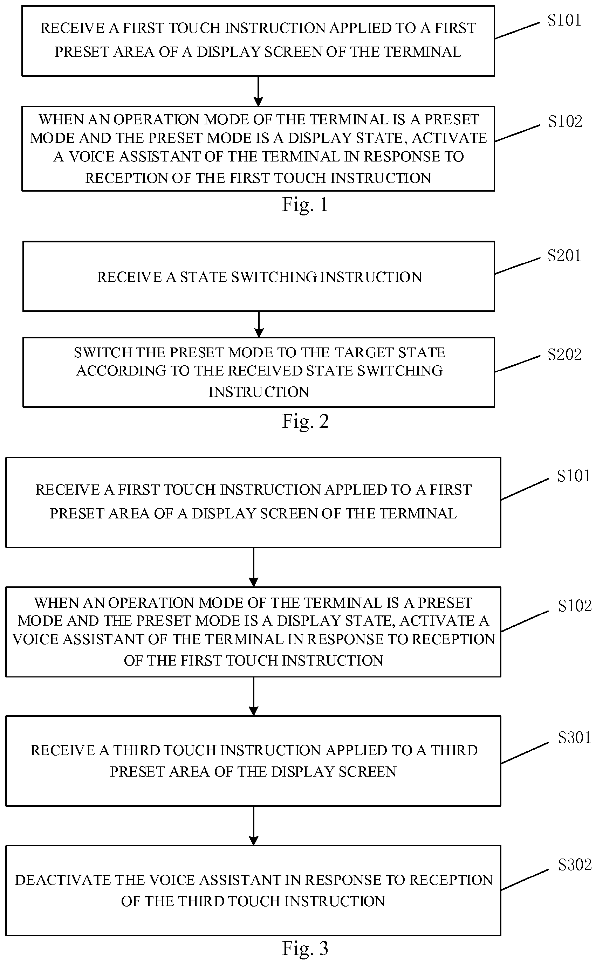

Fig. 1 is a flowchart illustrating a terminal control method according to an exemplary embodiment. As shown in Fig. 1, the method is applied to a terminal, and includes the following steps.

In step S101, a first touch instruction applied to a first preset area of a display screen of the terminal is received. The first preset area may be a part of the area on the display screen, or may be the entire area of the display screen. For example, it may be all the areas other than the status bar on the display screen. The first touch instruction may be, for example, single click or multiple clicks on the touch screen, or a slide on the touch screen starting from any position in the first preset area and ending at any position in the first preset area, as long as it is any touch operation in contact with the display screen.

In step S 102, when an operation mode of the terminal is a preset mode and the preset mode is a display state, a voice assistant of the terminal is activated in response to reception of the first touch instruction.

The preset mode may be any customized mode such as a driving mode, an activity mode, etc., wherein the driving mode may indicate that the user is in a driving state, and the activity mode may indicate that the user is in an activity where an operation on the terminal is inconvenient, such as cooking in the kitchen, running on a treadmill or the like. The user can activate the preset mode in the terminal through a normal mode activating method according to his/her own need, such as voice activation or fixed setting entrance activation, etc.

The display state indicates that when the terminal is in the preset mode, the user is allowed to perform voice control on the terminal through the activated voice assistant.

Through the above technical solution, the user may choose to activate the preset mode in a special situation where a manual operation on the terminal is inconvenient, such as driving, running, cooking, etc., whereas when the operation mode of the terminal is the preset mode and the preset mode is a display state, for activating the voice assistant, the user only has to apply a first touch instruction to a first preset area of a display screen of the terminal, e.g., clicking any position on the first preset area of the display screen of the terminal, etc. In this way, the voice assistant in the terminal can be activated to assist in the functioning of the terminal without complicated fixed actions of the user, such as double-clicking the home button of the terminal, clicking the fixed entrance after unlocking the terminal, and the like. The use or operation of the terminal is facilitated for the user by activating the voice assistant, the operation of activating the voice assistant is greatly simplified for the user so that the user can activate the voice assistant quickly and conveniently when it is inconvenient for the user to operate the terminal while he/she has to use the voice assistant. Thus, the user is assisted in operating the terminal, preventing occurrence of accidents caused by distract of the user when controlling activation of the voice assistant in the terminal. Moreover, there are no very high requirements on the hardware of the terminal, and the present disclosure is applicable for most terminals.

Fig. 2 is a flowchart illustrating a terminal control method according to another exemplary embodiment. As shown in Fig. 2, the method is applied to a terminal. When the operation mode of the terminal is the preset mode, the method includes the following steps.

In step S201, a state switching instruction is received, wherein the state switching instruction is used to instruct switch of the preset mode from a current state to a target state, the current state is one of a display state and a hidden state, and the target state is the other of the display state and the hidden state, and wherein when the current state is the display state, the target state is the hidden state, and when the current state is the hidden state, the target state is the display state.

In step S202, the preset mode is switched to the target state according to the received state switching instruction.

The state switching instruction may include a first state switching instruction and a second state switching instruction, wherein the first state switching instruction is used to instruct switch of the preset mode from the hidden state to the display state, and the second state switching instruction is used to instruct switch of the preset mode from the display state to the hidden state.

As described above, when the display state indicates that the terminal is in the preset mode, the user is allowed to perform voice control on the terminal through the activated voice assistant. Correspondingly, the hidden state indicates a state in which the preset mode is "temporarily exited", that is, when the preset mode is in the hidden state, the terminal does not actually exit the preset mode, but changes the preset mode to a pause state. In this case, the voice assistant can be deactivated, and the terminal can perform, in response to a touch instruction generated by the user through a gesture operation, a corresponding operation.

Optionally, when the preset mode is the hidden state, the method may further include: controlling the voice assistant to be in an inactive state; and upon reception of a second touch instruction applied to a second preset area of the display screen, executing an operation corresponding to the second touch instruction. That is, when the preset mode is switched from the display state to the hidden state, the voice assistant is deactivated regardless of whether it is now in an activated state. In addition, the terminal now allows the user to perform gesture control. For example, the user can apply a second touch instruction to a second preset area of the display screen through manual operation to instruct the terminal to perform an operation corresponding to the second touch instruction, such as opening a certain application, querying information, and the like. The second preset area may be the entire display screen or a partial area on the display screen, for example, areas other than the status bar. The second touch instruction may be any instruction generated by touching the display screen, including any one or more of clicking, sliding and the like.

When the current state of the preset mode is the display state, the user can activate the voice assistant through a screen touch operation such as clicking the first preset area on the display screen or sliding on the first preset area. At this point, the terminal allows the user to control by voice, such as opening an application, querying information, chatting with others and the like according to the user's voice instruction. Optionally, when the preset mode is currently in the display state, the terminal does not allow the user to implement, by using a gesture operation, a corresponding function, such as opening an application, querying information, making a call, etc., whereas the screen touch operation on the first preset area of the display screen can only activate the voice assistant and cannot trigger other functions to be executed. After the preset mode is switched to the hidden state, the interface before entering the preset mode can be displayed on the display screen of the terminal. The user can operate the terminal normally on the interface through gesture operations, that is, restore the user's manual control. For example, when the terminal is a smart phone, if the preset mode is in a hidden state, the user can run different programs by clicking various program icons displayed on the display screen, for example, clicking a short message icon, editing a short message, sending a short message, making a call, reading news, etc.

The state switching instruction may be, for example, a voice instruction, received by the voice assistant, for indicating state switching, or a screen touch instruction, applied to the display screen of the terminal, for indicating state switching, or also a button-press instruction, applied to a physical button on the terminal, for indicating state switching. For example, the screen touch instruction may be a slide instruction to slide upward from a bottom edge of the display screen to a specified position, or a slide instruction in the status bar on the display screen, or also a click instruction on the status bar. The button-press instruction may be, for example, triggered by the home button of the terminal, or triggered by the volume up/down button of the terminal separately or in combination.

Through the above technical solution, when the operation mode of the terminal is in the preset mode, the preset mode can be controlled to switch between the display state and the hidden state by the state switching instruction. Moreover, when the preset mode is in the hidden state, the display interface of the terminal can be switched back to the display state before entering the preset mode, thereby enabling the user to realize manual operation and control of the terminal without exiting the preset mode, by switching the preset mode to the hidden state. This also avoids the problem that the action of activating the voice assistant in the preset mode conflicts with the user's action of manual operation and control of the terminal. With the switching of the preset mode between the display state and the hidden state, the voice control and the gesture control of the terminal are alternated, thereby satisfying the user's use requirements in different scenes.

For example, when the preset mode is the driving mode, in a case where the user is driving the vehicle, the terminal is set to be in the driving mode, and the user can activate the voice assistant by clicking the first preset area on the display screen of the terminal. However, in a case of temporary parking or long-time red light, if the user needs to manually control the mobile phone, it is only required to switch the driving mode to the hidden state, and then the user can use the mobile phone normally. When it is necessary to restore the normal driving mode, it is only required to switch the driving mode in the hidden state to the display state.

In one possible implementation, the method may further include: prompting the current state of the preset mode so as to prompt the user that the preset mode is currently in the display state or the hidden state. For example, when the current state of the preset mode is the display state, the voice broadcast may be used to prompt, for example, "the preset mode has currently been entered", and the "preset mode" may be replaced by the mode name in an actual application; the current state can also be prompted by text or image or any other form on the display screen. For example, when the current state of the preset mode is the display state, the edge of the display screen can be highlighted to prompt the current state. The width of the edge to be highlighted may be determined according to the size of the display screen of the actual terminal, and is not limited herein. The edge can be any one or more of the four sides of the display screen, such as the edges on the left and right sides of the display screen. Highlighting refers to a higher brightness relative to the display brightness at the middle area of the display screen. For example, if the brightness of the display is divided into 3 levels, wherein the first level is the darkest, and the third level is the brightest, then, when the preset mode is the display state, the brightness at the middle area of the display screen can be displayed with brightness of the first level, and the brightness at the edge(s) of the display screen can be displayed with brightness of the second or third level, as long as the brightness at the edge(s) of the display screen is higher than that at the middle area of the display screen. In this way, by highlighting the edge of the display screen, the user can be prompted that the preset mode is in the display state, that is, the user is prompted that the voice assistant can be directly activated by applying the first touch instruction to any position on the first preset area of the display screen.

The prompting of the current state of the preset mode may also be performed according to the switching condition of the state. For example, when the user switches the current state of the preset mode from the display state to the hidden state, the following voice prompt may be performed: "the preset mode is paused, you can use the phone normally"; and when the user switches the current state of the preset mode from the hidden state to the display state, the following voice prompt may be performed: "the preset mode has been restored". The "preset mode" in the above voice prompts can be replaced by the mode name in an actual application.

In addition, prompting the current state of the preset mode may further include: displaying in a status bar on the display screen a character for prompting the current state of the preset mode so as to prompt the current state, e.g., "in the driving mode" or "in the sport mode", etc.

In one possible implementation, the method may further include: when no voice instruction is received within a first preset time period from when the voice assistant was activated, outputting operation guide information, the operation guide information being used to guide the user to use the voice assistant. For example, when no voice instruction is received within a first preset time period from when the voice assistant was activated, the terminal may broadcast the following content by voice: "what can I do for you?" or "you can try to say "navigate me home" or "play the music"", etc. As such, on one hand, the user can be assisted in understanding the functions of the voice assistant, and on the other hand, it can play a role of guiding the user to use the voice assistant. Especially for new users who have not used the voice assistant in the preset mode, they can be facilitated in quickly grasping how to use the voice assistant. In addition, the terminal can also output the operation guide information by means of text display. For example, the following text is displayed on the display screen in the form of a dialog box: "you can say: 1. the screen should be brighter; 2. send a WeChat message to my mother; 3. navigate me to the airport", etc. When guiding the user's operation, the voice prompt may match with the text prompt to prompt the user with the same content, or they may not match with each other, in which case different operation prompts are given respectively.

Optionally, the method may further include: activating when no voice instruction is received within a second preset time period from when the terminal outputted the operation guide information, deactivating the voice assistant, thereby reducing power consumption.

Fig. 3 is a flowchart illustrating a terminal control method according to further another exemplary embodiment. As shown in Fig. 3, the method is applied to a terminal. When the preset mode is in the display state and the voice assistant is activated, the method includes the following steps.

In step S301, a third touch instruction applied to a third preset area of the display screen is received. The third preset area may be any area on the display screen, for example, it may be a blank area on the current display interface, on which no text or image is displayed. The first preset area, the second preset area, and the third preset area may be the same or may be not completely the same, and the disclosure has no limitation on this. The third touch instruction may be a single click or multiple clicks on the touch screen.

In step S302, the voice assistant is deactivated in response to reception of the third touch instruction.

Through the above technical solution, after receiving the first touch instruction applied by the user to any position on the first preset area of the display screen and then activating the voice assistant, the voice assistant is deactivated according to the third touch instruction. In this way, the activation and deactivation of the voice assistant can be both completed only by a simple touch on the display screen of the terminal, which greatly simplifies the user's operation on the voice assistant, enabling the user to easily use the voice assistant of the terminal to satisfy his/her needs during driving or in other cases where it is inconvenient for him/her to operate the terminal manually.

In one possible implementation, the method further includes: receiving a preset mode exit instruction, and instructing the terminal to exit the preset mode according to the preset mode exit instruction. The preset mode exit instruction may be, for example, a voice instruction, received by the voice assistant, for instructing exiting the preset mode. For example, when the user says "exit the preset mode", the terminal may receive the instruction and exit the preset mode in response to the instruction. The preset mode exit instruction may also be, for example, a screen touch instruction, applied to the display screen of the terminal, for instructing exiting the preset mode. For example, when the user clicks or slides on the status bar of the display screen, the terminal can receive the instruction and exit the preset mode in response to the instruction. In addition, the preset mode exit instruction may also be, for example, a button-press instruction, applied to a physical button of the terminal, for instructing exiting the preset mode. For example, when the user clicks a return button on the terminal, the terminal may receive the instruction and exit the preset mode in response to the instruction.

Through the above technical solution, the user can control the terminal to exit the preset mode very conveniently after there is no need for the terminal to be in the preset mode.

It should be noted that the control instructions such as the first touch instruction, the second touch instruction, the third touch instruction, the state switching instruction (which may include the first state switching instruction and the second state switching instruction described above) and the preset mode exit instruction mentioned in the present disclosure can be accurately identified and distinguished by the terminal, so that the terminal can make a matching and correct response to different instructions.

In one possible implementation, the method may further include: when the terminal enters or exits the preset mode, outputting corresponding prompt information. The prompt information may be voice prompt information, text prompt information, or also any other form of information. When the prompt information is the voice prompt information, for example, when the user activates the preset mode via voice or a fixed setting entrance, the following voice prompt information may be output: "the preset mode has been entered now; please click the screen to activate me at any time". When the user sends an instruction to cause the terminal to exit the preset mode, the following voice prompt information may be output: "the preset mode has been exited". The "preset mode" in the voice prompt information may be may be correspondingly replaced by the actual mode name. By outputting the prompt information, the user can know about the current operation mode of the terminal more clearly, thus facilitating the user's operation.

In one possible implementation, the method may further include: when the operation mode of the terminal is the preset mode, upon reception of incoming call or message, performing voice broadcast according to the incoming call information or the message. For example, when the terminal is in the preset mode, if there is a call incoming, the calling information, such as the caller's name, number, etc., can be broadcast via voice so that the user can know. Alternatively or additionally, if a message (which may be a short message, a message in a social application, or also a push message from an application, etc.) is received, the message may be broadcast via voice, so that the user can know about the message in time without having to look at the mobile phone, thus avoiding distraction of the user.

For the above-mentioned function of voice broadcasting according to incoming call information or message, the user can turn this function on or off by operating a corresponding switch. When the user chooses to turn off this function, the corresponding voice prompt may be output to prompt the user that the voice broadcast will not be performed according to the incoming call information or the message. When the user chooses to turn on this function, the corresponding voice prompt may also be output so as to prompt the user to perform voice broadcasting according to the incoming call information or the message.

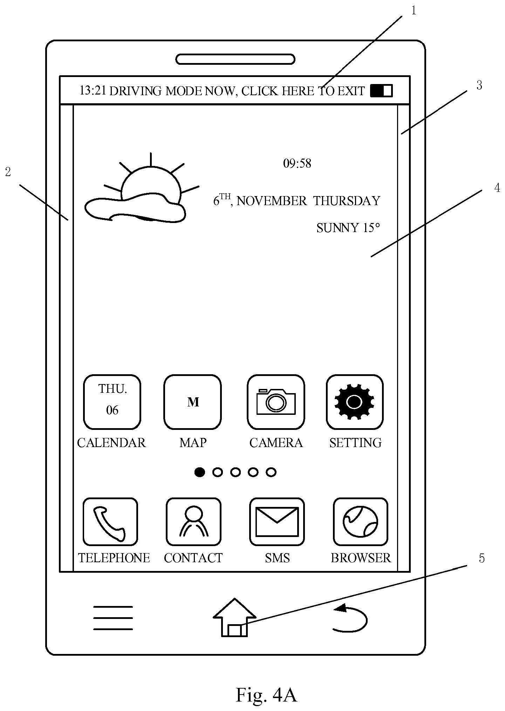

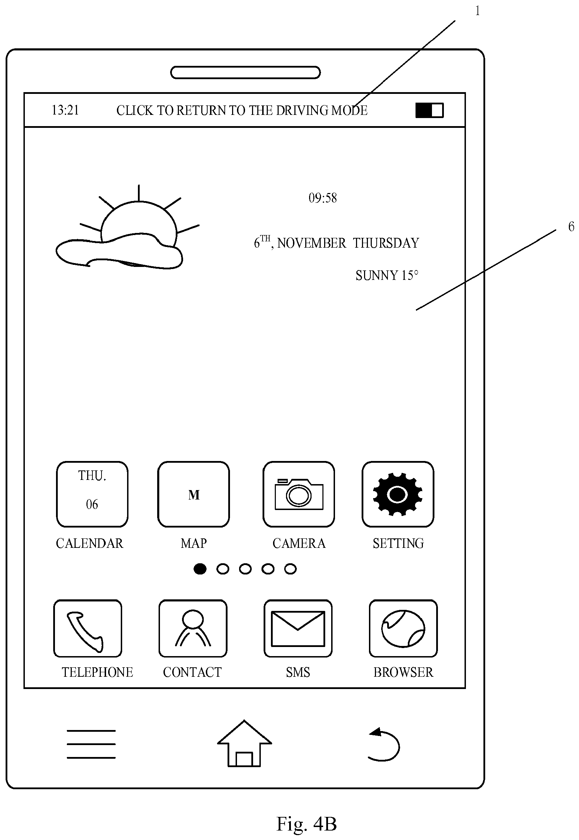

The present disclosure will be exemplified below in conjunction with the embodiments illustrated in Figs. 4A and 4B.

In this embodiment, the terminal is a smart phone, and the user turns on the driving mode through the fixed setting entrance in the mobile phone before driving the vehicle. After the driving mode is turned on, the driver makes a selection to confirm that the new message needs to be broadcast via voice. After the driving mode is turned on, the terminal will broadcast the voice: "now the driving mode has been entered, and the incoming calls and new messages will be broadcast for you; please click the screen to activate me if you have a problem at any time". The display interface of the mobile phone in the driving mode is as shown in Fig. 4A, and the status bar 1 on the display screen displays the words "driving mode now, click here to exit". The user can exit the driving mode by clicking the status bar 1. The status bar 1, an edge area 2 and an edge area 3 of the display screen are all in a highlighted state, that is, the brightness of the status bar 1, the edge area 2 and the edge area 3 is higher than the middle area 4 of the display screen.

At this point, the user only needs to click any area other than the status bar on the display screen to activate the voice assistant, and the program corresponding to the icon on the display screen will not be triggered. That is, in this embodiment, the first preset area is all the areas on the display screen other than the status bar, and the first touch instruction is a single click on the display screen.

When the user does not need to use the voice assistant, he/she can click any area of the display screen where no text or image is displayed, so as to deactivate the voice assistant, so that the display screen returns to the display interface again as shown in Fig. 4A. That is, the third touch instruction is a single click on the display screen.

When the user needs to temporarily exit the driving mode, for example, at the time of waiting before a traffic light, in order that the user can manually operate the mobile phone without exiting the driving mode, the user can temporarily exit the driving mode by clicking the home button 5, that is, to switch the driving mode from the display state to the hidden state, and the terminal will broadcast the voice at this point: "the driving mode is paused, and you can use the mobile phone normally". The display interface of the display screen at this point is shown as Fig. 4B. Then, since the driving mode is in the hidden state, the user can normally use the mobile phone by performing a screen touch operation on the area 6, without activating the voice assistant. The words "click to return to the driving mode" is displayed in the status bar 1 of the display screen, and the user can return to the driving mode by clicking the status bar 1, that is, the driving mode is switched from the hidden state to the display state. The terminal will now perform a voice broadcast: "the driving mode has been restored".

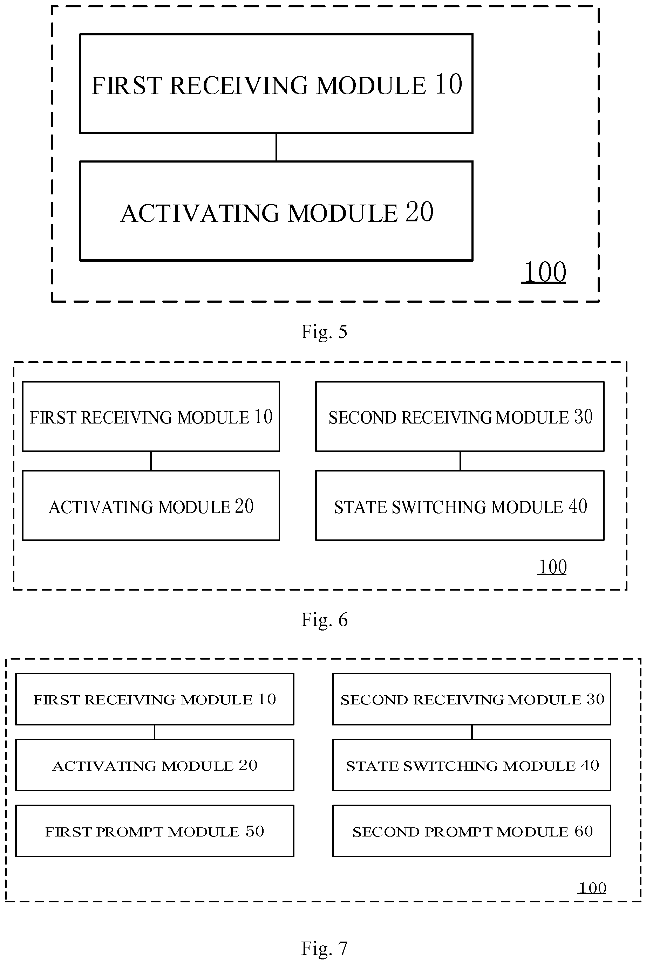

Fig. 5 is a schematic block diagram illustrating a terminal control device 100 according to an exemplary embodiment. With reference to Fig. 5, the device 100 includes a first receiving module 10 and an activating module 20.

The first receiving module 10 is configured to receive a first touch instruction applied to a first preset area of a display screen of the terminal.

The activating module 20 is configured to, when an operation mode of the terminal is a preset mode and the preset mode is a display state, activate a voice assistant of the terminal in response to the first touch instruction received by the first receiving module 10.

Through the above technical solution, when the terminal is in a preset mode and the preset mode is a display state, for activating the voice assistant in the terminal, the user only has to apply a first touch instruction to a first preset area of a display screen of the terminal. No additional complicated operations are required, and the operation of activating the voice assistant is greatly simplified for the user so that when it is inconvenient for the user to operate the terminal while he/she has to use the voice assistant, the user can activate the voice assistant quickly and conveniently, thus preventing occurrence of accidents caused by distract of the user when controlling activation of the voice assistant in the terminal. Moreover, there are no very high requirements on the hardware of the terminal, and the present disclosure is applicable for most terminals.

Fig. 6 is a schematic block diagram illustrating a terminal control device 100 according to another exemplary embodiment. As shown in Fig. 6, the device 100 further includes a second receiving module 30 and a state switching module 40.

The second receiving module 30 is configured to receive a state switching instruction, the state switching instruction being used to instruct switch of the preset mode from a current state to a target state, wherein the current state is one of a display state and a hidden state, and the target state is the other of the display state and the hidden state.

The state switching module 40 is configured to switch the preset mode to the target state according to the received state switching instruction.

Fig. 7 is a schematic block diagram illustrating a terminal control device 100 according to further another exemplary embodiment. As shown in Fig. 7, the device 100 further includes a first prompt module 50.

The first prompt module 50 is configured to prompt the current state of the preset mode so as to prompt the user that the preset mode is currently in the display state or the hidden state.

In one possible implementation, the device 100 may further include:
a control module, configured to, when the preset mode is the hidden state, control the voice assistant to be in an inactive state; and
an executing module configured to, when the control module controls the voice assistant to be in the inactive state, upon reception of a second touch instruction applied to a second preset area of the display screen, execute an operation corresponding to the second touch instruction.

In one possible implementation, as shown in Fig. 7, the device 100 may further include:
a second prompt module 60, configured to, when the terminal enters or exits the preset mode, output corresponding prompt information.

In one possible implementation, the preset mode is a driving mode.

In one possible implementation, the device 100 may further include:
an output module, configured to when no voice instruction is received within a preset time period from when the voice assistant was activated, output operation guide information, the operation guide information being used to guide the user to use the voice assistant.

In one possible implementation, the device 100 may further include:
a voice broadcast module configured to, when the operation mode of the terminal is the preset mode, upon reception of incoming call or message, perform voice broadcast according to the incoming call information or the message.

For the device in the above embodiments, the specific manners in which various modules thereof operate have been described in detail in the embodiment relating to the above method, and therefore will not be repeated herein.

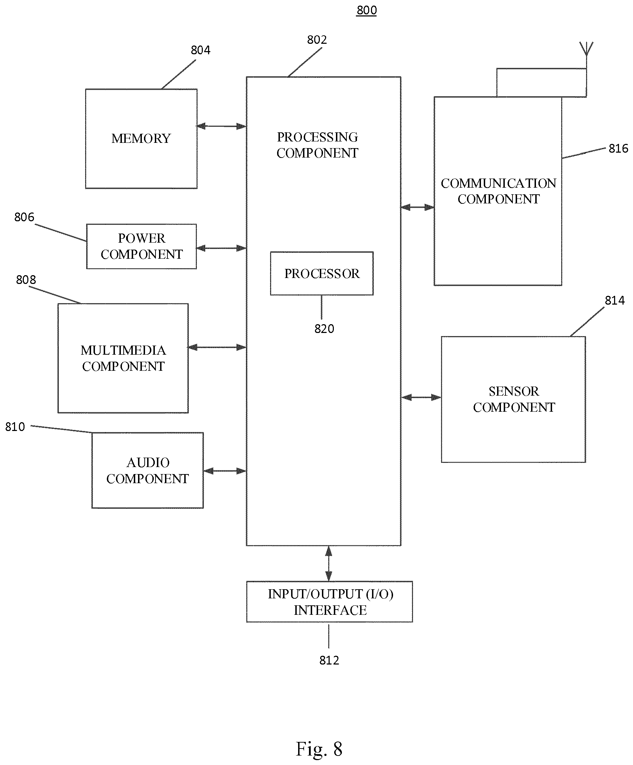

Fig. 8 is a block diagram illustrating a terminal control device 800. For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described terminal control method. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described terminal control method.

In exemplary embodiments, there is also provided a non-transitory computer-readable storage medium including instructions, such as included in the memory 804, executable by the processor 820 in the device 800, for performing the above described terminal control method. For example, the non-transitory computer-readable storage medium may be a ROM, a RAM, a CD-ROM, a magnetic tape, a floppy disc, an optical data storage device, and the like.

It will be appreciated that the present disclosure is not limited to the exact construction that has been described above and illustrated in the accompanying drawings, and that various modifications and changes may be made without departing from the scope thereof. It is intended that the scope of the disclosure only be limited by the appended claims.

## Claims

1. A terminal control method, comprising:
receiving (5101) a first touch instruction applied to anywhere in the entire area of a display screen of the terminal, the display being a touchscreen; and
when an operation mode of the terminal is a preset mode and the preset mode is in
an enabled state, activating (S102) a voice control in response to reception of the first touch instruction, wherein the voice is received with a microphone of the terminal;
wherein when the operation mode of the terminal is the preset mode, the method further comprises:
receiving (S201) a state switching instruction, the state switching instruction being used to instruct switch of the preset mode from a current state to a target state, wherein the current state is one of an enabled state and a disabled state, and the target state is the other of the enabled state and the disabled state; and
switching (S202) the preset mode to the target state according to the received state switching instruction, wherein when the preset mode is in the disabled state, the
method further comprises:
controlling the voice control to be in an inactive state; and
upon reception of a second touch instruction applied to a second preset area of the display screen, executing an operation corresponding to the second touch instruction.

2. The method according to claim 1, further comprising:
transmitting a prompt of the current state of the preset mode via voice or display, to a user, so as to prompt the user that the preset mode is currently in the display state or the hidden state.

3. The method according to any preceding claim, further comprising:
when the terminal enters or exits the preset mode, outputting corresponding prompt information by voice or display.

4. The method according to any preceding claim, further comprising:
when no voice instruction is received within a preset time period since the time when the voice control was activated, outputting operation guide information by voice or display, the operation guide information being used to guide a user to use the voice control.

5. The method according to any preceding claim, further comprising:
when the operation mode of the terminal is the preset mode, upon reception of incoming call or message, performing voice broadcast according to incoming call information or the message.

6. A terminal control device, comprising:
a first receiving module (10), configured to receive a first touch instruction applied to anywhere in the entire area of a display screen of the terminal, the display screen being a touchscreen; and
an activating module (20), configured to, when an operation mode of the terminal is a preset mode and the preset mode is in
an enabled state, activate a voice control in response to the first touch instruction received by the first receiving module, wherein the voice is received with a microphone of the terminal;
further comprising:
a second receiving module (30), configured to receive a state switching instruction, the state switching instruction being used to instruct switch of the preset mode from a current state to a target state, wherein the current state is one of an enabled state and a disabled state, and the target state is the other of the enabled state and the disabled state; and
a state switching module (40), configured to switch the preset mode to the target state according to the received state switching instruction, further comprising:
a control module, configured to, when the preset mode is in the disabled state, control the voice control to be in an inactive state; and
an executing module configured to, when the control module controls the voice assistant to be in the inactive state, upon reception of a second touch instruction applied to a second preset area of the display screen, execute an operation corresponding to the second touch instruction.

7. The device according to claim 6, further comprising: a first prompt module (50), configured to transmit a prompt of the current state of the preset mode to a user, via voice or display, so as to prompt the user that the preset mode is currently in the enabled state or the disabled state.

8. The device according to any of claims 6 to 7, further comprising:
a second prompt module (60), configured to, when the terminal enters or exits the preset mode, output corresponding prompt information, by voice or display.

9. The device according to any of claims 6 to 8, further comprising:
an output module, configured to, when no voice instruction is received within a preset time period from when the voice control was activated, output operation guide information by voice or display, the operation guide information being used to guide a user to use the voice control.

10. The device according to any of claims 6 to 9, further comprising:
a voice broadcast module configured to, when the operation mode of the terminal is the preset mode, upon reception of incoming call or message, perform voice broadcast according to incoming call information or the message.

11. A computer readable medium having stored thereon instructions that, when being executed computer comprising a touchscreen display and a microphone, by a cause the computer to carry out the method according to any of claims 1 to 5.

## Patentansprüche

1. Endgerätsteuerverfahren, umfassend:
Empfangen (S101) eines ersten Berührungsbefehls, der irgendwo in der gesamten Fläche eines Anzeigebildschirms des Endgeräts angewendet wird, wobei die Anzeige ein Berührungsbildschirm ist; und,
wenn ein Betriebsmodus des Endgeräts ein voreingestellter Modus ist und sich der voreingestellte Modus in einem aktivierten Zustand befindet, eine Sprachsteuerung als Reaktion auf den Empfang des ersten Berührungsbefehls aktiviert wird (S102), wobei die Sprache mit einem Mikrofon des Endgeräts empfangen wird;
wobei, wenn der Betriebsmodus des Endgeräts der voreingestellte Modus ist, das Verfahren weiter Folgendes umfasst:
Empfangen (S201) eines Zustandsumschaltbefehls, wobei der Zustandsumschaltbefehl dazu verwendet wird, ein Umschalten des voreingestellten Modus von einem aktuellen Zustand in einen Zielzustand zu befehlen, wobei der aktuelle Zustand einer eines aktivierten und eines deaktivierten Zustands ist und der Zielzustand der andere des aktivierten Zustands und des deaktivierten Zustands ist; und
Umschalten (S202) des voreingestellten Modus in den Zielzustand gemäß dem empfangenen Zustandsumschaltbefehl, wobei, wenn sich der voreingestellte Modus in dem deaktivierten Zustand befindet, das Verfahren weiter Folgendes umfasst:
Steuern der Sprachsteuerung derart, dass sie sich in einem inaktiven Zustand befindet; und
bei Empfang eines zweiten Berührungsbefehls, der an einer zweiten voreingestellten Fläche des Anzeigebildschirms angewendet wird, Ausführen einer Operation, die dem zweiten Berührungsbefehl entspricht.

2. Verfahren nach Anspruch 1, das weiter Folgendes umfasst:
Übertragen eines Bedienerhinweises zum aktuellen Zustand des voreingestellten Modus über Sprache oder Anzeige an einen Benutzer, um den Benutzer darauf hinzuweisen, dass sich der voreingestellte Modus derzeit in dem Anzeigestatus oder in dem verborgenen Zustand befindet.

3. Verfahren nach einem vorstehenden Anspruch, das weiter Folgendes umfasst:
wenn das Endgerät in den voreingestellten Modus eintritt oder diesen verlässt, Ausgeben entsprechender Bedienerhinweisinformationen über Sprache oder Anzeige.

4. Verfahren nach einem vorstehenden Anspruch, das weiter Folgendes umfasst:
wenn innerhalb einer voreingestellten Zeitspanne seit dem Zeitpunkt, an dem die Sprachsteuerung aktiviert wurde, kein Sprachbefehl empfangen wird, Ausgeben von Operationsanleitungsinformationen über Sprache oder Anzeige, wobei die Operationsanleitungsinformationen dazu verwendet werden, einen Benutzer bei der Verwendung der Sprachsteuerung zu anzuleiten.

5. Verfahren nach einem vorstehenden Anspruch, das weiter Folgendes umfasst:
wenn der Betriebsmodus des Endgeräts der voreingestellte Modus ist, Durchführen bei Empfang eines eingehenden Anrufs oder einer eingehenden Nachricht einer Sprachausstrahlung gemäß den Informationen des eingehenden Anrufs oder der eingehenden Nachricht.

6. Endgerätsteuervorrichtung, die Folgendes umfasst:
ein erstes Empfangsmodul (10), das dazu konfiguriert ist, einen ersten Berührungsbefehl zu empfangen, der irgendwo in der gesamten Fläche eines Anzeigebildschirms des Endgeräts angewendet wird, wobei der Anzeigebildschirm ein Berührungsbildschirm ist; und
ein Aktivierungsmodul (20), das dazu konfiguriert ist, wenn ein Betriebsmodus des Endgeräts ein voreingestellter Modus ist und der voreingestellte Modus in
einem aktivierten Zustand ist, eine Sprachsteuerung als Reaktion auf den ersten Berührungsbefehl, der von dem ersten Empfangsmodul empfangen wird, zu aktivieren, wobei die Sprache mit einem Mikrofon des Endgeräts empfangen wird;
das weiter Folgendes umfasst:
ein zweites Empfangsmodul (30), das dazu konfiguriert ist, einen Zustandsumschaltbefehl zu empfangen, wobei der Zustandsumschaltbefehl dazu verwendet wird, Umschalten des voreingestellten Modus von einem aktuellen Zustand in einen Zielzustand zu befehlen, wobei der aktuelle Zustand einer eines aktivierten Zustands und eines deaktivierten Zustands ist und der Zielzustand der andere des aktivierten Zustands und des deaktivierten Zustands ist; und
ein Zustandsumschaltmodul (40), das dazu konfiguriert ist, den voreingestellten Modus gemäß dem empfangenen Zustandsumschaltbefehl in den Zielzustand umzuschalten,
das weiter Folgendes umfasst:
ein Steuermodul, das dazu konfiguriert ist, die Sprachsteuerung zu steuern, in einem inaktiven Zustand zu sein, wenn sich der voreingestellte Modus in dem deaktivierten Zustand befindet; und
ein Ausführungsmodul, das dazu konfiguriert ist, wenn das Steuermodul den Sprachassistenten steuert, in dem inaktiven Zustand zu sein, bei Empfang eines zweiten Berührungsbefehls, der an eine zweite voreingestellte Fläche des Anzeigebildschirms angewendet wird, eine Operation auszuführen, die dem zweiten Berührungsbefehl entspricht.

7. Vorrichtung nach Anspruch 6, die weiter Folgendes umfasst:
ein erstes Bedienerhinweismodul (50), das dazu konfiguriert ist, über Sprache oder Anzeige einen Bedienerhinweis des aktuellen Zustands des voreingestellten Modus an einen Benutzer zu übertragen, um den Benutzer darauf hinzuweisen, dass der voreingestellte Modus sich derzeit in dem aktivierten oder deaktivierten Zustand befindet.

8. Vorrichtung nach einem der Ansprüche 6 bis 7, die weiter Folgendes umfasst:
ein zweites Bedienerhinweismodul (60), das dazu konfiguriert ist, dass es, wenn das Endgerät in den voreingestellten Modus eintritt oder ihn verlässt, entsprechende Bedienerhinweisinformationen über Sprache oder Anzeige auszugeben.

9. Vorrichtung nach einem der Ansprüche 6 bis 8, die weiter Folgendes umfasst:
ein Ausgabemodul, das dazu konfiguriert ist, wenn innerhalb einer voreingestellten Zeitspanne ab dem Aktivieren der Sprachsteuerung kein Sprachbefehl empfangen wird, Operationsanleitungsinformationen über Sprache oder Anzeige auszugeben, wobei die Operationsanleitungsinformationen dazu verwendet werden, einen Benutzer beim Verwenden der Sprachsteuerung anzuleiten.

10. Vorrichtung nach einem der Ansprüche 6 bis 9, die weiter Folgendes umfasst:
ein Sprachausstrahlungsmodul, das dazu konfiguriert ist, wenn der Betriebsmodus des Endgeräts der voreingestellte Modus ist, beim Empfang eines eingehenden Anrufs oder einer eingehenden Nachricht eine Sprachausstrahlung gemäß den Informationen des eingehenden Anrufs oder der eingehenden Nachricht durchzuführen.

11. Computerlesbares Medium, das darauf gespeicherte Befehle aufweist, die, wenn sie auf einem Computer ausgeführt werden, der eine Berührungsbildschirmanzeige und ein Mikrofon umfasst, den Computer dazu veranlassen, das Verfahren nach einem der Ansprüche 1 bis 5 auszuführen.

## Revendications

1. Procédé de commande de terminal, comprenant les étapes consistant à :
recevoir (S101) une première instruction tactile appliquée n'importe où dans toute la zone d'un écran d'affichage du terminal, l'affichage étant un écran tactile ; et
lorsqu'un mode de fonctionnement du terminal est un mode prédéfini et le mode prédéfini est dans un état activé, activer (S102) une commande vocale en réponse à la réception de la première instruction tactile, dans lequel la voix est reçue avec un microphone du terminal ;
dans lequel, lorsque le mode de fonctionnement du terminal est le mode prédéfini, le procédé comprend en outre les étapes consistant à :
recevoir (S201) une instruction de commutation d'état, l'instruction de commutation d'état étant utilisée pour ordonner la commutation du mode prédéfini d'un état actuel à un état cible, dans lequel l'état actuel est l'un parmi un état activé et un état désactivé, et l'état cible est l'autre parmi l'état activé et l'état désactivé ; et
commuter (S202) le mode prédéfini à l'état cible conformément à l'instruction de commutation d'état reçue, dans lequel, lorsque le mode prédéfini est dans l'état désactivé, le procédé comprend en outre les étapes consistant à :
commander la commande vocale pour qu'elle soit dans un état inactif ; et
à la réception d'une seconde instruction tactile appliquée à une seconde zone prédéfinie de l'écran d'affichage, exécuter une opération correspondant à la seconde instruction tactile.

2. Procédé selon la revendication 1, comprenant en outre l'étape consistant à :
transmettre une invite de l'état actuel du mode prédéfini par le biais de la voix ou de l'affichage, à un utilisateur, de manière à indiquer à l'utilisateur que le mode prédéfini est actuellement dans l'état d'affichage ou l'état caché.

3. Procédé selon une quelconque revendication précédente, comprenant en outre l'étape consistant à :
lorsque le terminal entre ou sort du mode prédéfini, émettre des informations d'invite correspondantes par la voix ou l'affichage.

4. Procédé selon une quelconque revendication précédente, comprenant en outre l'étape consistant à :
lorsque aucune instruction vocale n'est reçue dans une période de temps prédéfinie depuis le moment où la commande vocale a été activée, émettre des informations de guide de fonctionnement par la voix ou l'affichage, les informations de guide de fonctionnement étant utilisées pour guider un utilisateur dans l'utilisation de la commande vocale.

5. Procédé selon une quelconque revendication précédente, comprenant en outre l'étape consistant à :
lorsque le mode de fonctionnement du terminal est le mode prédéfini, lors de la réception d'un appel ou d'un message entrant, effectuer une diffusion vocale en fonction des informations d'appel entrant ou du message.

6. Dispositif de commande de terminal, comprenant :
un premier module de réception (10), configuré pour recevoir une première instruction tactile appliquée n'importe où dans toute la zone d'un écran d'affichage du terminal, l'écran d'affichage étant un écran tactile ; et
un module d'activation (20), configuré pour, lorsqu'un mode de fonctionnement du terminal est un mode prédéfini et le mode prédéfini est dans
un état activé, activer une commande vocale en réponse à la première instruction tactile reçue par le premier module de réception, dans lequel la voix est reçue avec un microphone du terminal ;
comprenant en outre :
un second module de réception (30), configuré pour recevoir une instruction de commutation d'état, l'instruction de commutation d'état étant utilisée pour ordonner la commutation du mode prédéfini d'un état actuel à un état cible, dans lequel l'état actuel est l'un parmi un état activé et un état désactivé, et l'état cible est l'autre parmi l'état activé et l'état désactivé ; et
un module de commutation d'état (40), configuré pour commuter le mode prédéfini à l'état cible conformément à l'instruction de commutation d'état reçue,
comprenant en outre :
un module de commande, configuré pour, lorsque le mode prédéfini est dans l'état désactivé, commander la commande vocale pour qu'elle soit dans un état inactif ; et
un module d'exécution configuré pour, lorsque le module de commande commande l'assistant vocal pour qu'il soit dans l'état inactif, à la réception d'une seconde instruction tactile appliquée à une seconde zone prédéfinie de l'écran d'affichage, exécuter une opération correspondant à la seconde instruction tactile.

7. Dispositif selon la revendication 6, comprenant en outre :
un premier module d'invite (50), configuré pour transmettre une invite de l'état actuel du mode prédéfini à un utilisateur, par le biais de la voix ou de l'affichage, de manière à indiquer à l'utilisateur que le mode prédéfini est actuellement dans l'état activé ou l'état désactivé.

8. Dispositif selon l'une quelconque des revendications 6 à 7, comprenant en outre :
un second module d'invite (60), configuré pour, lorsque le terminal entre ou sort du mode prédéfini, émettre des informations d'invite correspondantes, par la voix ou l'affichage.

9. Dispositif selon l'une quelconque des revendications 6 à 8, comprenant en outre :
un module d'émission, configuré pour, lorsque aucune instruction vocale n'est reçue dans une période de temps prédéfinie depuis le moment où la commande vocale a été activée, émettre des informations de guide de fonctionnement par la voix ou l'affichage, les informations de guide de fonctionnement étant utilisées pour guider un utilisateur dans l'utilisation de la commande vocale.

10. Dispositif selon l'une quelconque des revendications 6 à 9, comprenant en outre :
un module de diffusion vocale configuré pour, lorsque le mode de fonctionnement du terminal est le mode prédéfini, lors de la réception d'un appel ou d'un message entrant, effectuer une diffusion vocale en fonction des informations d'appel entrant ou du message.

11. Support lisible par ordinateur sur lequel sont stockées des instructions qui, lorsqu'elles sont exécutées par un ordinateur comprenant un écran tactile et un microphone, amènent l'ordinateur à exécuter le procédé selon l'une quelconque des revendications 1 à 5.
